# EUROPÄISCHE PATENTSCHRIFT

(11) **EP 2 545 201 B1**
(45) Veröffentlichungstag und Bekanntmachung des Hinweises auf die Patenterteilung: **21.05.2014**
(21) Anmeldenummer: 11703904.0
(22) Anmeldetag: 17.02.2011
(51) Int. Cl.: C23C 28/00, C23C 28/04, C23C 30/00, F16J 9/06

(54) **SCHRAUBENDRUCKFEDER FÜR EINEN ÖLABSTREIFRING EINES KOLBENS IN EINEM VERBRENNUNGSMOTOR UND VERFAHREN ZUR BESCHICHTUNG EINER SCHRAUBENDRUCKFEDER**
HELICAL COMPRESSION SPRING FOR AN OIL RING OF A PISTON IN A MOTOR AND METHOD THEREFOR
RESSORT DE PRESSION HÉLICOÏDAL POUR UN SEGMENT RACLEUR D'HUILE D'UN PISTON DANS UN MOTEUR À COMBUSTION INTERNE ET PROCÉDÉ DESTINÉ AU REVÊTEMENT D'UN RESSORT DE PRESSION HÉLICOÏDAL

(30) Priorität: 09.03.2010 DE 102010002688
(43) Veröffentlichungstag der Anmeldung: 16.01.2013
(73) Patentinhaber: Federal-Mogul Burscheid GmbH, 51399 Burscheid (DE)
(72) Erfinder: KENNEDY, Marcus, 40479 Düsseldorf (DE); BRILLERT, Hans-Rainer, 51399 Burscheid (DE); ZINNABOLD, Michael, 51399 Burscheid (DE)
(74) Vertreter: HOFFMANN EITLE
(86) Internationale Anmeldenummer: PCT/EP2011/052343
(87) Internationale Veröffentlichungsnummer: WO 2011/110412

(56) Entgegenhaltungen:
- EP-A1- 1 717 493
- WO-A1-2007/020139
- WO-A1-2007/079834
- WO-A2-2009/121719

## Beschreibung

### Gebiet der Erfindung

Die Erfindung betrifft eine Schraubendruckfeder, die als Bestandteil eines zweiteiligen Ölabstreifrings in einem Kolben eines Verbrennungsmotors dafür vorgesehen ist, den zweiten Bestandteil eines derartigen Ölabstreifrings, nämlich den in Gleitkontakt mit einem Zylinder oder einer Zylinderlaufbuchse stehenden sogenannten Grundkörper gegen die Zylinderwand zu drücken. Ferner betrifft die vorliegende Erfindung ein Verfahren zur Beschichtung einer derartigen Schraubendruckfeder.

Wie erwähnt, befindet sich bei dem beschriebenen zweiteiligen Ölabstreifring die Schraubendruckfeder an der Innenseite der Anordnung, mit anderen Worten zwischen dem in Gleitkontakt mit der Zylinderwand stehenden Grundkörper des Kolbenrings und dem Boden der Kolbenringnut. Hier kommt es durch die dynamische Beanspruchung während des Betriebs des Motors zu Relativbewegungen zwischen dem Grundkörper und der Schraubendruckfeder. Diese Bewegung kann zu sogenanntem Sekundärverschleiß führen, der sich im Grundkörper in Form von Nuteingrabungen, und an der Feder in Form von Materialabtrag zeigen kann. In den Nuteingrabungen kann sich die Feder verhaken, was die Abstreifwirkung des Ölringes beeinträchtigt. Ferner kann es zu einem Nachlassen der zur Erfüllung der Funktion erforderlichen Tangentialkraft kommen.

### Stand der Technik

Aus der DE 10 2005 019 500 B4 geht eine Schraubendruckfeder hervor, die mit wasserstofffreien iC-Graphitschichten beschichtet ist.

Die EP 1 717 493 A1 offenbart eine Schraubendruckfeder für einen Ölabstreifkolbenring, welche zumindest partiell mit einer amorphen, verschleißfesten Graphitschicht versehen ist.

Die WO2009/121719 A2 betrifft einen Kolbenring mit einer metallhaltigen, amorphen Kohlenstoffschicht und einer metallfreien, amorphen Kohlenstoffschicht.

### Darstellung der Erfindung

Der Erfindung liegt die Aufgabe zugrunde, eine Schraubendruckfeder und ein Verfahren zu dessen Beschichtung zu schaffen, mit denen das Reib- und/oder Verschleiß- und/oder Einlaufverhalten zumindest einer Komponente eines zweiteiligen Ölabstreifrings verbessert wird.

Die Lösung dieser Aufgabe erfolgt zum einen durch die im Anspruch 1 beschriebene Schraubendruckfeder. Die daran vorgesehene Beschichtung zeichnet sich durch mehrere alternierende Lagen von CrN- und a-C:H:Me-Schichten aus. Bei ersten Versuchen hat sich herausgestellt, dass durch einen derartigen Schichtaufbau sowohl die Lebensdauer als auch der relative Reibwert verbessert werden kann. Die Lebensdauer wird insbesondere durch eine Verbesserung der Schichtstabilität verlängert. Ferner konnte bei ersten Versuchen ein verbessertes Einlaufverhalten zwischen der Feder und dem Kolbenring festgestellt werden.

Der guten Ordnung halber sei erwähnt, dass Me für Metall steht und hierfür beispielsweise Wolfram, Chrom, Titan, Germanium oder Silizium verwendet werden können. Sowohl die a-C:H:Me als auch die nachfolgend erwähnte a-C:H-Schicht sind DLC-Schichten und sorgen für einen vergleichsweisen geringen Verschleiß und gute Reibungseigenschaften. Insbesondere wird davon ausgegangen, dass, verursacht durch unterschiedliche radiale Anpressdrücke und dadurch erzeugte unterschiedliche Verschleißraten, beispielsweise über den Umfang einer Schraubendruckfeder, dennoch auf der Oberfläche immer zumindest teilweise DLC vorhanden ist, so dass die guten Reibeigenschaften, insbesondere auch unter Mangelschmierbedingungen, erhalten bleiben. Dies wird in vorteilhafter Weise kombiniert mit Vorteilen, welche die CrN-Schicht im Hinblick auf den Verschleiß bietet. Der gegenüber DLC üblicherweise höhere Verschleißwiderstand der CrN-Schicht kann in vorteilhafter Weise von Anfang an, bzw. wenn die äußerste DLC-Schicht verschlissen ist, wirksam werden. Die beschriebene, mehrlagige Beschichtung bietet darüber hinaus den Vorteil, dass deutlich höhere Gesamtschichtdicken als bei herkömmlichen DLC-Schichtsystemen realisiert werden können. Dies beruht im Wesentlichen darauf, dass die bei DLC gegenüber CrN höheren Eigenspannungen durch die CrN-Lagen innerhalb der Beschichtung insgesamt ausgeglichen werden können.

Die Schraubendruckfeder ist bevorzugt aus Stahl, insbesondere CrSi- oder CrNi-Stahl, im Wesentlichen spiralförmig gewickelt und weist dementsprechend zwei Federenden auf, die sich aufgrund der weitgehend kreisrunden Anordnung der Feder im Einbau- bzw. Betriebszustand ohne einen Zwischenraum treffen. Diese Stelle ist bevorzugt radial dem Stoß des Kolbenrings gegenüberliegend. Es sei erwähnt, dass die erfindungsgemäße Beschichtung beispielsweise auf die in der DE 10 2005 019 500 B4 beschriebene Schraubendruckfeder anstelle der dort beschriebenen wasserstofffreien iC-Graphitschichten aufgebracht werden kann. Insbesondere werden sämtliche Einzelmerkmale der dort beschriebenen Schraubendruckfeder durch die hierin erfolgte Bezugnahme zum Gegenstand der vorliegenden Anmeldung gemacht. Wie in dem in Bezug genommenen Dokument beschrieben, kann der Ölabstreifkolbenring umfänglich nicht geschlossen ausgeführt sein, sondern einen sogenannten Stoß, mit anderen Worten eine Lücke in Umfangsrichtung aufweisen. Die Schraubendruckfeder ist in diesem Bereich fortlaufend ausgebildet und ist bevorzugt im Bereich des Stoßes und symmetrisch zu diesem mit einem Umfangswinkel von 5° bis 60° beschichtet. In der in Bezug genommenen Veröffentlichung ist der vorangehend beschriebene Winkel um den Stoß des Kolbenrings mit α bezeichnet. An der Innenseite weist der Kolbenring eine bevorzugt im Querschnitt etwa halbkreisförmig geformte Nut zur Aufnahme der Schraubendruckfeder auf. In Achsrichtung der Schraubendruckfeder betrachtet ist diese bevorzugt auf der dem Kolbenring zugewandten Seite mit einem Winkel (β gemäß dem in Bezug genommenen Dokument) von 5° bis 180°, bevorzugt symmetrisch zur Mittelebene, beschichtet. Es sei ferner erwähnt, dass von der Anmelderin am gleichen Tag eine Anmeldung mit dem Titel "Gleitelement, insbesondere Kolbenring, und Verfahren zur Beschichtung eines Gleitelements" eingereicht wurde, in der eine ähnliche Beschichtung wie hierin beschrieben für ein Gleitelement, insbesondere einen Kolbenring angegeben ist. Sämtliche Merkmale der dort angegebenen Beschichtung sind auch auf die hierin beschriebene Beschichtung anwendbar. Ferner ist der dort beschriebene Kolbenring in einer der angegebenen Ausführungsformen in vorteilhafter Weise mit der hierin beschriebenen Schraubendruckfeder kombinierbar, und diese Kombination ist als Gegenstand der vorliegenden Anmeldung anzusehen. Ferner ist auf den Kolbenring diejenige Beschichtung, insbesondere an der Innenfläche, anwendbar, die in der von der Anmelderin ebenfalls am gleichen Tag eingereichten Anmeldung "Verfahren zur Beschichtung zumindest der Innenfläche eines Kolbenrings sowie Kolbenring" beschrieben ist.

Bevorzugte Weiterbildungen sind in den weiteren Ansprüchen beschrieben.

Für die Haftung der CrN-Schicht auf dem Substrat, also der Schraubendruckfeder, vorzugsweise aus Stahl, hat es sich als vorteilhaft erwiesen, eine Haftschicht aus Chrom auszubilden. Diese kann insbesondere aufgedampft sein und weist bevorzugt eine Schichtdicke von weniger als 0,5 µm auf. Als minimale Schichtdicke der Haftschicht wird derzeit 0,01 µm bevorzugt.

Für die äußerste Schicht der erfindungsgemäßen

Schraubendruckfeder, die sich zunächst in Berührung mit dem Kolbenring befindet, wird eine metallfreie DLC-Schicht, mit anderen Worten eine Schicht des Typs a-C:H bevorzugt. Eine derartige Schicht gewährleistet ein bestmögliches Einlaufverhalten. Als Dicke dieser Schicht haben sich 0,1 bis 5,0 µm als vorteilhaft erwiesen. Die Mindestschichtdicke von 0,1 µm ist für ein gutes Einlaufverhalten vorteilhaft. Die maximale Schichtdicke ergibt sich aufgrund der Mindesthaftfestigkeit, die bei dickeren Schichten geringer wird. Für die beschriebene äußerste oder Top-Schicht ist das Auftragen sowohl auf eine CrN - als auch eine a-C:H:Me-Schicht denkbar.

Für die Einzellagen der CrN- und a-C:H:Me-Schicht werden 30 nm bis 100 nm verwendet. Eine Dicke von mehr als 30 nm bietet den Vorteil, dass bei der Anwendung in der Serie die Prüffähigkeit des Schichtaufbaus gewährleistet wird.

Die Gesamtdicke der Beschichtung beträgt in vorteilhafter Weise, um mit einer guten Lebensdauer ein gutes Reibverhalten zu gewährleisten, 0,5 bis 10 µm. Die Anzahl der Einzellagen liegt zwischen 10 und 200.

Für die Härte der CrN-Schicht haben sich Werte von 800-1900 HV 0,002 bewährt. Diese Ausbildung kann mit einer Härte der metallfreien der DLC-Schicht von 1700-2900 HV 0,002 und/oder einer Härte der metallhaltigen DLC-Schicht von 800-1600 HV 0,002 kombiniert werden.

Es wird ferner erwartet, dass sich besonders gute Eigenschaften der DLC-Schicht, insbesondere der metallhaltigen und/oder metallfreien DLC-Schicht einstellen, wenn diese Wasserstoff enthält.

Die metallhaltige DLC-Schicht kann ferner in vorteilhafter Weise nanokristalline Metall- oder

Metallkarbidausscheidungen, wie z. B. WC, CrC, SiC, GeC oder TiC enthalten. Die Lösung der oben genannten Aufgabe erfolgt ferner durch das im Anspruch 8 beschriebene Verfahren.

In vorteilhafter Weise kann die beschriebene Beschichtung im Rahmen des erfindungsgemäßen Verfahrens durch eine Kombination aus PVD und PA-CVD-Verfahren hergestellt werden.

Es wird ferner eine Kombination zumindest einer vorangehend beschriebenen Schraubendruckfeder mit einem Kolbenring offenbart, der insbesondere die in der oben erwähnten parallel eingereichten Anmeldung beschriebene Beschichtung aufweisen kann. Ferner wird die Kombination des in dieser Weise entstehenden zweiteiligen Ölabstreifrings mit einem Laufpartner, insbesondere einem Zylinder oder einer Zylinderlaufbuchse eines Verbrennungsmotors, insbesondere eines Diesel- oder hoch aufgeladenen Otto-Motors, wobei der Laufpartner eisen- oder aluminiumbasiert ist, offenbart.

### Kurze Beschreibung der Zeichnungen

Nachfolgend wird ein bevorzugtes Ausführungsbeispiel der Erfindung unter Bezugnahme auf die Zeichnungen näher erläutert.

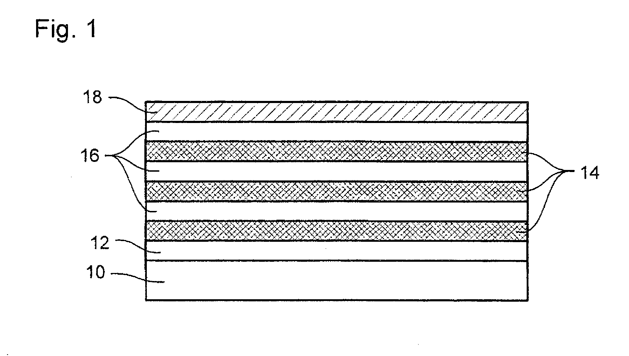

Die Figur zeigt einen erfindungsgemäßen Schichtaufbau.

### Ausführliche Beschreibung eines bevorzugten

### Ausführungsbeispiels der Erfindung

Wie aus der Figur hervorgeht, ist auf dem Grundwerkstoff 10 des Gleitelements zunächst eine Chrom-Haftschicht 12 aufgebracht. Darauf sind von innen nach außen alternierend mehrere a-C:H:Me-Schichten 14 und CrN-Schichten 16 aufgebracht. Die äußerste Schicht wird durch eine a-C:H-Schicht gebildet. Bei dem gezeigten Beispiel ist diese auf einer DLC-Schicht aufgebracht, sie kann jedoch ebenso auf einer a-C:H:Me-Schicht aufgetragen werden.

Die Herstellung erfolgt bevorzugt derart, dass die CrN-Schichten mittels PVD, die a-C:H:Me-Schicht mittels PVD und PA-CVD, und die a-C:H-Schicht mittels PA-CVD hergestellt werden.

## Patentansprüche

1. Schraubendruckfeder für einen Kolbenring, bevorzugt aus Stahl, insbesondere CrSi- oder CrNi-Stahl, mit einer Beschichtung, die alternierend mehrere Lagen von CrN-(16) und a-C:H:Me-Schichten (14) aufweist,
wobei die Anzahl der Lagen zwischen 10 und 200 beträgt und die CrN- und a-C:H:Me-Einzellagen eine Dicke von jeweils 30 nm bis 100 nm aufweisen.

2. Schraubendruckfeder nach Anspruch 1, **dadurch gekennzeichnet, dass** auf ein Substrat (10) der Schraubendruckfeder eine Haftschicht aus Chrom (12) aufgebracht ist, die vorzugsweise 0,01 bis 0,5 µm dick ist.

3. Schraubendruckfeder nach einem der vorangehenden Ansprüche, **dadurch gekennzeichnet, dass** die äußerste Schicht der Beschichtung eine a-C:H-Schicht (18) bevorzugt mit einer Dicke von 0,1 bis 5,0 µm ist.

4. Schraubendruckfeder nach einem der vorangehenden Ansprüche, **dadurch gekennzeichnet, dass** die Beschichtung insgesamt eine Dicke von 0,5-bis 10 µm aufweist.

5. Schraubendruckfeder nach einem der vorangehenden Ansprüche, **dadurch gekennzeichnet, dass** die Härte der CrN-Schicht bei 800-1900 HV 0,002 und/oder die Härte der metallfreien DLC-Schicht bei 1700-2900 HV 0,002 und/oder die Härte der metallhaltigen DLC-Schicht bei 800-1600 HV 0,002 liegt.

6. Schraubendruckfeder nach einem der vorangehenden Ansprüche, **dadurch gekennzeichnet, dass** zumindest eine metallhaltige und/oder metallfreie DLC-Schicht mittels PVD- und/oder PA-CVD-Verfahren hergestellt ist.

## Claims

1. Helical compression spring for a piston ring, preferably made of steel, in particular CrSi or CrNi steel, having a coating which has several layers of CrN (16) and a-C:H:Me layers (14) alternately, wherein the number of layers is between 10 and 200 and the CrN and a-C:H:Me individual layers have a thickness of 30 nm to 100 nm each.

2. Helical compression spring according to claim 1, **characterised in that** a bonding layer of chromium (12) which is preferably 0.01 to 0.5 µm thick is applied to a substrate (10) of the helical compression spring.

3. Helical compression spring according to any of the preceding claims, **characterised in that** the outermost layer of the coating is an a-C:H layer (18) preferably having a thickness from 0.1 to 5.0 µm.

4. Helical compression spring according to any of the preceding claims, **characterised in that** the coating has a thickness from 0.5 to 10 µm overall.

5. Helical compression spring according to any of the preceding claims, **characterised in that** the hardness of the CrN layer is 800-1900 HV 0.002 and/or the hardness of the metal-free DLC layer is 1700-2900 HV 0.002 and/or the hardness of the metal-containing DLC layer is 800-1600 HV 0.002.

6. Helical compression spring according to any of the preceding claims, **characterised in that** at least one metal-containing and/or metal-free DLC layer is made by PVD and/or PA-CVD methods.

## Revendications

1. Ressort de pression hélicoïdal pour un segment de piston, de préférence en acier, en particulier en acier CrSi ou CrNi, muni d'un revêtement qui présente en alternance plusieurs couches de CrN (16) et des couches de a-C:H:Me (14), le nombre de couches étant situé entre 10 et 200 et les couches individuelles de CrN et a-C:H:Me présentant une épaisseur de 30 nm à 100 nm, respectivement.

2. Ressort de pression hélicoïdal selon la revendication 1, **caractérisé en ce qu'**une couche d'adhérence en chrome (12), qui est d'une épaisseur de préférence de 0,01 à 0,5 *µ*m, est déposée sur un substrat (10) du ressort de pression hélicoïdal.

3. Ressort de pression selon l'une des revendications précédentes, **caractérisé en ce que** la couche la plus extrême du revêtement est une couche a-C:H (18) ayant de préférence une épaisseur de 0,1 à 5,0 *µ*m.

4. Ressort de pression selon l'une des revendications précédentes, **caractérisé en ce que** le revêtement présente au total une épaisseur de 0,5 à 10 *µ*m.

5. Ressort de pression selon l'une des revendications précédentes, **caractérisé en ce que** la dureté de la couche de CrN à 800-1900 HV est de 0,002 et/ou la dureté de la couche DLC exempte de métal à 1700-2900 HV est de 0,002 et/ou la dureté de la couche DLC contenant du métal à 800-1600 HV est de 0,002.

6. Ressort de pression selon l'une des revendications précédentes, **caractérisé en ce qu'**au moins une couche DLC contenant du métal et/ou exempte de métal est fabriquée par des procédés PVD et/ou PA-CVD.
